# EUROPÄISCHE PATENTSCHRIFT

(11) **EP 3 006 273 B1**
(45) Veröffentlichungstag und Bekanntmachung des Hinweises auf die Patenterteilung: **06.09.2017**
(21) Anmeldenummer: 15002006.3
(22) Anmeldetag: 06.07.2015
(51) Int. Cl.: B60R 21/00, B60P 3/38, B60N 3/00, B62D 33/06

(54) **RÜCKHALTEVORRICHTUNG FÜR EINE FAHRZEUG-LIEGE**
DEVICE FOR RETAINING A VEHICLE BED
DISPOSITIF DE RETENUE POUR SIÈGE DE VÉHICULE

(30) Priorität: 10.10.2014 DE 102014015102
(43) Veröffentlichungstag der Anmeldung: 13.04.2016
(73) Patentinhaber: MAN Truck & Bus AG, 80995 München (DE)
(72) Erfinder: Gündogdu, Oguzhan, 85221 Dachau (DE); Siflinger, Markus, 85604 Zorneding (DE)
(74) Vertreter: v. Bezold & Partner Patentanwälte - PartG mbB

(56) Entgegenhaltungen:
- WO-A1-02/16172
- WO-A1-2013/043155
- DE-B3-102005 041 739
- DE-C1- 4 322 434
- DE-C1- 4 422 121
- FR-A1- 2 783 780
- GB-A- 2 351 709
- US-A- 5 876 059

## Beschreibung

Die Erfindung betrifft eine Rückhaltevorrichtung für eine Fahrzeug-Liege, z. B. eines Nutzfahrzeugs, insbesondere eine Fahrerhaus-Liege eines Lastkraftwagens.

DE 10 2005 041 739 B3 offenbart eine Rückhaltevorrichtung nach dem Oberbegriff des Anspruchs 1 und beschreibt eine Liege für ein Nutzfahrzeug, die eine Liegefläche und eine Aufstiegshilfe aufweist, welche wenigstens eine Sprosse aufweist und beweglich mit der Liege verbunden ist. Die Aufstiegshilfe ist aus einer ersten Position, in welcher sich die wenigstens eine Sprosse unterhalb des Höhenniveaus der Liegefläche befindet und den Zugang zu der Liegefläche erleichtert, durch Schwenken der Aufstiegshilfe um eine im wesentlichen horizontale Drehachse in eine zweite Position, in welcher sich die wenigstens eine Sprosse oberhalb des Höhenniveaus der Liegefläche befindet und eine Rückhaltesicherung für eine sich auf der Liegefläche befindliche Person bildet, und durch Schwenken der Liegefläche um eine im wesentlichen horizontale Drehachse in eine dritte Position bringbar, in welcher die wenigstens eine Sprosse in einer im wesentlichen horizontalen Richtung von der Liegefläche absteht und eine Halterung für Handtücher und dergleichen bildet.
Im Stand der Technik sind Fahrerhäuser von Lastkraftwägen mit integrierten Liegen bekannt. Die Liegen befinden sich üblicherweise relativ weit oben im Fahrerhaus, so dass einerseits das Aufsteigen zu den Liegen erschwert ist und andererseits die Gefahr besteht, dass Personen wegen Unachtsamkeit oder während des Schlafes aus den Liegen herausfallen. Um das Aufsteigen zu den Liegen zu erleichtern, sind aus der Praxis von einem Fahrerhausdach herunterklappbare Treppenkonstruktionen bekannt. Um Personen gegen Herausfallen zu sichern, sind aus der Praxis Sicherungsnetze bekannt.
Eine Aufgabe der Erfindung ist es, eine alternative und/oder verbesserte Rückhaltevorrichtung für eine Fahrzeug-Liege zu schaffen, die vorzugsweise multifunktional einsetzbar ist, z. B. zusätzlich als Sitz, Aufstiegshilfe und/oder Tisch genutzt werden kann.
Diese Aufgabe wird mit den Merkmalen des unabhängigen Anspruchs gelöst. Vorteilhafte Weiterbildungen der Erfindung können den Unteransprüchen und der folgenden Beschreibung bevorzugter Ausführungsformen der Erfindung entnommen werden.

Die Erfindung schafft eine Rückhaltevorrichtung für eine Liege eines Fahrzeugs, insbesondere für eine Fahrerhaus-Liege eines Nutzfahrzeugs, z. B. eines Lastkraftwagens oder eines anderen Kraftfahrzeugs. Die Rückhaltevorrichtung dient zur Montage an eine Fahrzeug-Wand, insbesondere eine Fahrzeug-Schottwand und/oder eine in Breitenrichtung des Fahrzeugs verlaufende Fahrzeug-Wand. Die Fahrzeug-Wand ist zweckmäßig zwischen der Fahrzeug-Liege und einem Fahrer- und/oder Beifahrer-Sitz des Fahrzeugs angeordnet.
Die Rückhaltevorrichtung umfasst ein Rückhalteelement zur Sicherung einer Person gegen Herausfallen aus der Fahrzeug-Liege.
Das Rückhalteelement zeichnet sich insbesondere dadurch aus, dass es von einer Ausgangsposition (Ausgangsstellung) in zumindest eine Betriebsposition (Betriebsstellung) verschwenkbar und/oder verschiebbar ist. Die zumindest eine Betriebsposition (Betriebsstellung) dient zweckmäßig zur Sicherung der Person gegen Herausfallen aus der Fahrzeug-Liege. Die Ausgangsposition entspricht insbesondere einer Verstau- und/oder Ruheposition (Verstau- und/oder Ruhestellung).
Es ist möglich, dass das Rückhalteelement im Wesentlichen in Höhenrichtung des Fahrzeugs verschiebbar ausgeführt ist, also zweckmäßig nach oben und unten, um von der Ausgangsposition in die Betriebsposition und/oder umgekehrt zu gelangen.
Das Rückhalteelement ist vorzugsweise ein Sicherungsbügel, der aus zumindest einem Profilelement ausgebildet sein kann.

Die Rückhaltevorrichtung weist eine verschwenkbare, in einer horizontalen Ausrichtung arretierbare plattenförmige Einrichtung auf, die in der horizontalen Ausrichtung als Trittstufe zur Aufstiegshilfe, z. B. zu der Fahrzeug-Liege, und/oder als Tischplatte genutzt werden kann.
Es ist möglich, dass die Rückhaltevorrichtung eine verschwenkbare, in einer horizontalen Ausrichtung arretierbare plattenförmige Ergänzungseinrichtung aufweist, die zweckmäßig die plattenförmige Einrichtung ergänzen kann, so dass vorzugsweise die plattenförmige Ergänzungseinrichtung ebenfalls als Aufstiegshilfe und/oder als Tischplatte genutzt werden kann.

Es ist möglich, dass die plattenförmige Einrichtung und/oder die plattenförmige Ergänzungseinrichtung an dem Rückhalteelement zweckmäßig mittelbar oder unmittelbar gehaltert ist.

Die plattenförmige Einrichtung und/oder die plattenförmige Ergänzungseinrichtung kann insbesondere relativ zum Rückhalteelement verschwenkbar sein. Alternativ oder ergänzend kann die plattenförmige Einrichtung und/oder die plattenförmige Ergänzungseinrichtung zusammen mit dem Rückhalteelement verschiebbar sein.

Die plattenförmige Ergänzungsrichtung kann z. B. ausziehbar sein, vorzugsweise relativ zu der plattenförmigen Einrichtung, vorzugsweise so, dass sie im eingefahrenen Zustand die plattenförmige Einrichtung überlappt und im ausgefahrenen Zustand ergänzt.

Die plattenförmige Ergänzungsrichtung kann allerdings auch an der plattenförmigen Einrichtung schwenkbar montiert sein, um relativ zu der plattenförmigen Einrichtung verschwenkt werden zu können.

Es ist möglich, dass die Rückhaltevorrichtung eine Schwenkkonstruktion, insbesondere einen Schwenkbügel aufweist. Der Schwenkbügel kann z. B. aus zumindest einem Profilelement ausgebildet sein. Die Schwenkkonstruktion ist insbesondere an dem Rückhalteelement zweckmäßig mittelbar oder unmittelbar gehaltert.

Die plattenförmige Einrichtung und/oder die plattenförmige Ergänzungseinrichtung sind vorzugsweise an der Schwenkkonstruktion zweckmäßig mittelbar oder unmittelbar gehaltert.

Die Schwenkkonstruktion kann teleskopartig aus- und einfahrbare Stützelemente aufweisen, die zur Auflage auf einer Stützfläche (z. B. eine innerhalb oder außerhalb des Fahrzeugs befindliche Bodenfläche) dienen.

Es ist möglich, dass die Schwenkkonstruktion schwenkbar an dem Rückhalteelement, insbesondere dem Sicherungsbügel, mittelbar oder unmittelbar montiert ist.

Die Schwenkkonstruktion kann vorzugsweise in einer senkrechten Ausrichtung, einer im Wesentlichen horizontalen Ausrichtung und/oder einer schrägen Ausrichtung (z. B. um 30°+/- 15° verschwenkt) arretiert werden.

Es ist möglich, dass die plattenförmige Einrichtung und/oder die plattenförmige Ergänzungseinrichtung an der Schwenkkonstruktion zweckmäßig mittelbar oder unmittelbar gehaltert ist, relativ zu der Schwenkkonstruktion drehbar ist und/oder zusammen mit der Schwenkkonstruktion verschwenkbar ist. Bei einer besonders bevorzugten Ausführungsform ist die plattenförmige Einrichtung zusammen mit der Schwenkkonstruktion verschwenkbar und zudem relativ zu der Schwenkkonstruktion drehbar, während die plattenförmige Ergänzungseinrichtung zwar zusammen mit der Schwenkkonstruktion verschwenkbar, aber nicht relativ dazu drehbar ist. Die plattenförmige Einrichtung und die optionale plattenförmige Ergänzungseinrichtung können in der im Wesentlichen horizontalen Ausrichtung als Aufstiegshilfe zweckmäßig zur Fahrzeug-Liege und/oder als Tisch genutzt werden.

Es ist möglich, dass das Rückhalteelement als zweckmäßig nach oben und unten verschwenkbare plattenförmige Einrichtung ausgeführt ist. Das Rückhaltelement kann insbesondere um 180° +/-25°, +/- 10° oder +/- 5° verschwenkbar ausgeführt sein, um von der Ausgangsposition in die Betriebsposition und/oder umgekehrt zu gelangen.

Das Rückhalteelement kann z. B. in der Ausgangsposition in einer im Wesentlichen senkrechten Ausrichtung, in der Betriebsposition in einer im Wesentlichen senkrechten Ausrichtung zur Sicherung der Person gegen Herausfallen aus der Fahrzeug-Liege und/oder in einer im Wesentlichen horizontalen Ausrichtung arretierbar sein, um in der im Wesentlichen horizontalen Ausrichtung als Aufstiegshilfe (zweckmäßig zu der Fahrzeug-Liege) und/oder als Tischplatte genutzt werden zu können.

Es ist möglich, dass das Rückhalteelement um 180° +/- 25°, +/- 10° oder +/- 5° verschwenkbar ist, vorzugsweise in Höhenrichtung und/oder Breitenrichtung des Fahrzeugs, also nach oben und unten und/oder nach rechts und links. Zu diesem Zweck kann das Rückhalteelement zumindest einen beweglichen Teilabschnitt aufweisen und mit einem oder mehreren Schwenkmechanismen versehen sein.

Die Rückhaltevorrichtung ist vorzugsweise aus dem Fahrzeug entnehmbar ausgeführt, um außerhalb des Fahrzeugs als Sitz, Aufstiegshilfe und/oder Tisch genutzt werden zu können.

Es ist möglich, dass das Rückhalteelement und/oder die Schwenkkonstruktion in Breitenrichtung des Fahrzeugs längenvariabel ausgeführt ist, insbesondere ein- und ausschiebbar oder ein- und ausschwenkbar ausgeführt ist. Zu diesem Zweck kann das Rückhalteelement und/oder die Schwenkkonstruktion z. B. zumindest einen beweglichen Teilabschnitt umfassen, der über einen Schiebe- oder Schwenkmechanismus ein- und ausgeschoben oder ein-und ausgeschwenkt werden kann.

Das Rückhalteelement und/oder die Schwenkkonstruktion sind vorzugsweise im Wesentlichen U-förmig ausgebildet und/oder aus zumindest einem Stabelement, insbesondere Profilelement (z. B. Hohlprofil, I-Profil, Vollprofil, etc.) ausgebildet.

Es ist möglich, dass das Rückhalteelement in einer Aufnahmekonstruktion im Wesentlichen in Höhenrichtung des Fahrzeugs geführt gelagert ist, um zweckmäßig geführt nach oben und unten geschoben werden zu können.

Es ist möglich, dass eine Kühl- und/oder Staubox zur Verfügung gestellt ist, und die Kühl-und/oder Staubox, das Rückhalteelement und vorzugsweise die Schenkkonstruktion so ausgeführt und anordbar sind, dass die Kühl- und/oder Staubox unter und/oder zwischen dem Rückhalteelement und vorzugsweise der Schwenkkonstruktion ein- und ausfahrbar ist. Die Kühl- und/oder Staubox dient insbesondere zur Positionierung unter der Fahrzeug-Liege.

Das Rückhalteelement kann vorzugsweise mit einer Bewegungsdämpfung zur Dämpfung der Schwenk- und/oder Verschiebebewegung versehen sein, z. B. mit zumindest einer Feder (z. B. Torsionsfeder, Spiralfeder, etc.), zumindest einem elastischen Dämpfungselement und/oder einem Zahnrad- und/oder Zahnstangenmechanismus, etc. Sogar eine hydraulische Bewegungsdämpfung ist möglich.

Zu erwähnen ist, dass die plattenförmige Einrichtung und/oder die plattenförmige Ergänzungseinrichtung im Rahmen der Erfindung z. B. massiv, gitterrahmen- oder gitterplattenförmig ausgeführt sein kann und darüber hinaus andere plattenförmige Ausführungsformen umfassen kann.
Zu erwähnen ist außerdem, dass die Tischfunktion z. B. von der Fahrzeug-Liege aus und/oder von einem Fahrer- und/oder Beifahrersitz aus genutzt werden kann, zweckmäßig z. B. als Brotzeit- und/oder Nachttisch.
Zu erwähnen ist ferner, dass die Rückhaltevorrichtung eine Montageeinrichtung zur zweckmäßig fahrzeugfesten Montage an die Fahrerhaus-Wand und zum Haltern des Rückhalteelements umfassen kann, relativ zu der das Rückhalteelement beweglich ausgeführt ist (verschwenkbar und/oder verschiebbar).
Die Montageeinrichtung kann z. B. eine Gleitführung oder eine Gelenkkonstruktion für das Rückhalteelement umfassen.
Die Ausgangstellung/-position kann zweckmäßig als Ruhe- und/oder Verstaustellung/- position bezeichnet werden.
Die Erfindung ist nicht auf eine Rückhaltevorrichtung beschränkt, sondern umfasst auch ein Fahrzeug und/oder ein Fahrerhaus für einen Lastkraftwagen mit einer Rückhaltevorrichtung wie hierin offenbart.
Das Fahrzeug kann z. B. ein Kraftfahrzeug, ein Nutzfahrzeug, ein Lastkraftwagen, ein Wohnmobil oder ein Anhänger mit Liege sein.
Die zuvor beschriebenen Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Rückhaltevorrichtung für eine Fahrzeug-Liege in eingefahrener Ausgangsposition und mit eingefahrener Kühl-/Staubox,
- Figur 2: zeigt die Rückhaltevorrichtung der Figur 1 in eingefahrener Ausgangsposition, allerdings mit großteils ausgefahrener Kühl-/Staubox,
- Figur 3: zeigt die Rückhaltevorrichtung der Figuren 1 und 2 in ausgefahrener Betriebsposition und vollständig ausgefahrener Kühl-/Staubox,
- Figur 4: zeigt eine Rückhaltevorrichtung für eine Fahrzeug-Liege gemäß einer Ausführungsform der Erfindung in eingefahrener Ausgangsposition,
- Figur 5: zeigt die Rückhaltevorrichtung der Figur 4 in ausgefahrener Betriebsposition,
- Figur 6: zeigt die Rückhaltevorrichtung der Figuren 4 und 5 in Funktionsstellung "Tischplatte",
- Figur 7: zeigt eine Rückhaltevorrichtung für eine Fahrzeug-Liege gemäß einer anderen Ausführungsform der Erfindung in Funktionsstellung "Aufstiegshilfe zur Fahrzeug-Liege",
- Figur 8: zeigt die Rückhaltevorrichtung der Figur 7 außerhalb des Fahrzeugs,
- Figur 9: zeigt eine Rückhaltevorrichtung für eine Fahrzeug-Liege gemäß einer anderen Ausführungsform der Erfindung in Funktionsstellung "Tischplatte klein bzw. Aufstiegshilfe",
- Figur 10: zeigt die Rückhaltevorrichtung der Figur 9 in Funktionsstellung "Tischplatte groß",
- Figur 11: zeigt eine Rückhaltevorrichtung für eine Fahrzeug-Liege gemäß einer anderen Ausführungsform der Erfindung in eingefahrener Ausgangsposition,
- Figur 12: zeigt die Rückhaltevorrichtung der Figur 11 in Funktionsstellung "Tisch",
- Figur 13: zeigt die Rückhaltevorrichtung der Figuren 11 und 12 in ausgeschwenkter Betriebsposition und mit teilweise ausgefahrener Kühl-/Staubox, und
- Figur 14: zeigt eine Rückhaltevorrichtung für eine Fahrzeug-Liege gemäß einer wiederum anderen Ausführungsform der Erfindung in Funktionsstellung "Tisch groß".

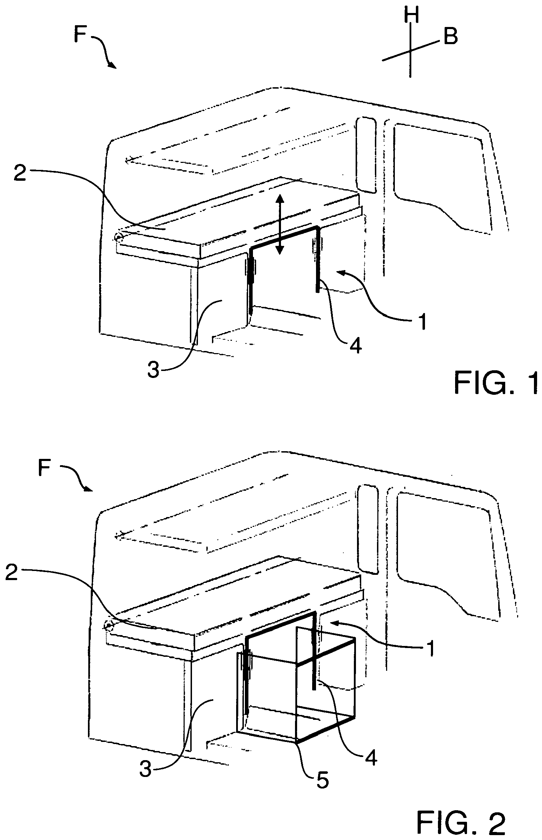

Die unter Bezugnahme auf die Figuren beschriebenen Ausführungsformen stimmen teilweise überein, so dass ähnliche oder identische Teile mit den gleichen Bezugszeichen versehen sind, und zu deren Erläuterung auch auf die Beschreibung der anderen Ausführungsformen verwiesen wird, um Wiederholungen zu vermeiden. r
Figur 1 zeigt eine perspektivische Ansicht in ein Fahrerhaus F eines Nutzfahrzeugs mit einer Rückhaltevorrichtung 1 für eine Fahrerhaus-Liege 2. Die Rückhaltevorrichtung 1 kann auch in anderen Fahrzeugen verbaut werden, z. B. in Wohnwägen oder mit einer Liege ausgestatteten Kraftfahrzeugen, vorzugsweise sogenannten Wohnmobilen.
Die Rückhaltevorrichtung 1 umfasst eine Montageeinrichtung zur Montage an eine Fahrerhaus-Wand 3, insbesondere eine in Breitenrichtung B des Fahrerhauses F verlaufende Fahrerhaus-Schottwand. Die Fahrerhaus-Wand 3 kann in Breitenrichtung B durchgängig sein oder zwei voneinander beabstandete Wandabschnitte (links und rechts) umfassen.
Die Rückhaltevorrichtung 1 umfasst ein Rückhalteelement 4 zur Sicherung einer Person gegen Herausfallen aus der Fahrerhaus-Liege 2, das von einer unteren Ausgangs-/Ruheposition (Ausgangs-/Ruhestellung) in zumindest eine obere Betriebsposition (Betriebsstellung) zur Sicherung der Person gegen Herausfallen aus der Fahrerhaus-Liege 2 in Höhenrichtung H des Fahrerhauses F verschiebbar ist. Die Verschiebbarkeit des Rückhalteelements 4 ist in Figur 1 durch den Doppelpfeil schematisch angedeutet.
Das Rückhalteelement 4 ist als im Wesentlichen U-förmiger Sicherungsbügel ausgeführt, dessen zwei Schenkel durch die Montageeinrichtung gehalten und geführt werden.
Figur 2 zeigt die Rückhaltevorrichtung der Figur 1, allerdings im Gegensatz zur Figur 1 mit teilweise ausgefahrener Kühl- und/oder Staubox 5. Das Rückhalteelement 4 ist so ausgeführt und angeordnet, dass die Kühl-/Staubox 5 unter und zwischen dem U-förmigen Rückhalteelement 4 ein- und ausfahrbar ist, selbst dann, wenn sich das Rückhalteelement 4 in eingefahrener Ausgangstellung befindet.

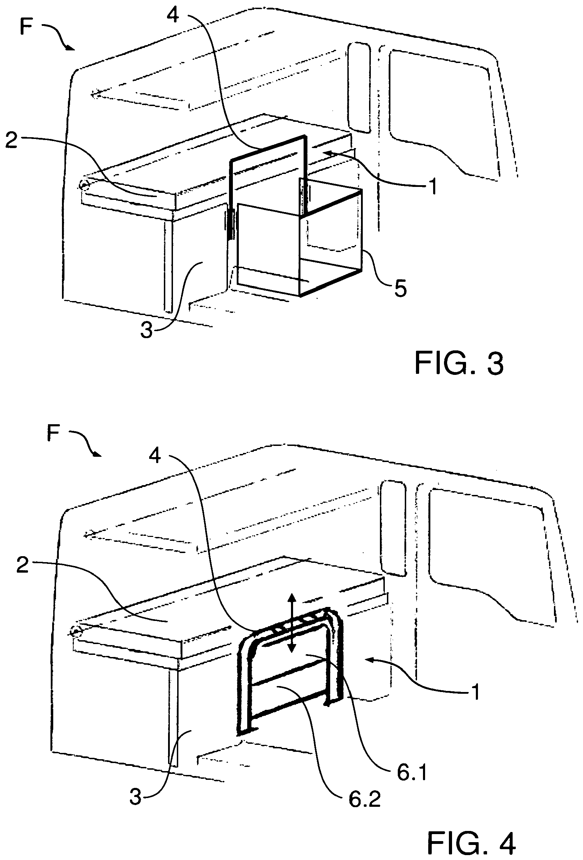

Figur 3 zeigt die Rückhaltevorrichtung 1 der Figuren 1 und 2, allerdings mit vollständig ausgefahrener Kühl-/Staubox 5 und insbesondere mit dem Rückhalteelement 4 in ausgefahrener Betriebsposition zur Sicherung einer Person gegen Herausfallen aus der Fahrerhaus-Liege 2.
Das Rückhalteelement 4 kann in der Ausgangsposition und der Sicherungsposition und optional in zumindest einer Zwischenposition arretiert werden.

Figur 4 zeigt eine schematische Ansicht in ein Fahrerhaus F mit einer Rückhaltevorrichtung 1 für eine Fahrerhaus-Liege 2 gemäß einer Ausführungsform der Erfindung.
Die Rückhaltevorrichtung 1 umfasst zunächst wie schon zuvor beschrieben ein nach oben und unten verschiebbares, im Wesentlichen U-förmiges Rückhalteelement 4. Das Rückhalteelement 4 befindet sich in Figur 4 in eingefahrener Ausgangs-/Ruhestellung.
Eine Besonderheit der in Figur 4 gezeigten Ausführungsform ist, dass die Rückhaltevorrichtung 1 eine verschwenkbare plattenförmige Einrichtung 6.1 und eine optionale verschwenkbare plattenförmige Ergänzungseinrichtung 6.2 aufweist.

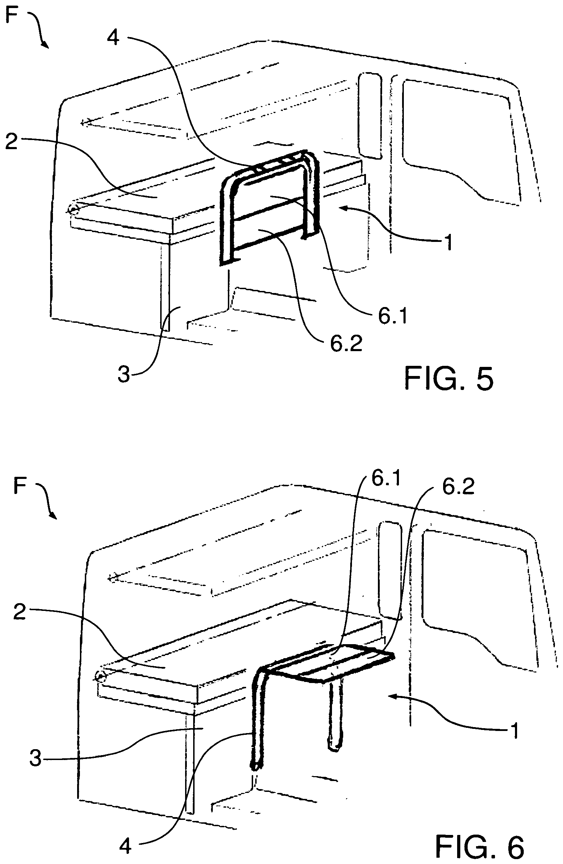

Figur 5 zeigt die Rückhaltevorrichtung 1 der Figur 4 mit dem Rückhalteelement 4 in ausgefahrener Betriebsstellung.
Figur 6 zeigt die Rückhaltevorrichtung 1 der Figuren 4 und 5.
Figur 6 zeigt die plattenförmige Einrichtung 6.1 und die optionale plattenförmige Ergänzungseinrichtung 6.2 in ausgeschwenkter, in einer horizontalen Ausrichtung arretierten Stellung, in der sie als Tisch genutzt werden können.
Figur 6 zeigt das Rückhalteelement 4 in eingefahrener Ausgangs-/Ruhestellung. Es ist allerdings möglich, dass die plattenförmige Einrichtung 6.1 und die optionale plattenförmige Ergänzungseinrichtung 6.2 auch in der ausgefahrenen Betriebsstellung des Rückhalteelements 4 in einer horizontalen Ausrichtung arretiert werden können.
Die plattenförmige Ergänzungseinrichtung 6.2 kann z. B. relativ zu der plattenförmigen Einrichtung 6.1 translatorisch verschiebbar oder verschwenkbar sein. Ebenfalls ist es möglich, anstatt zwei relativ zueinander beweglichen Teilen 6.1 und 6.2 eine dementsprechend große plattenförmige Einrichtung 6.1 vorzusehen.

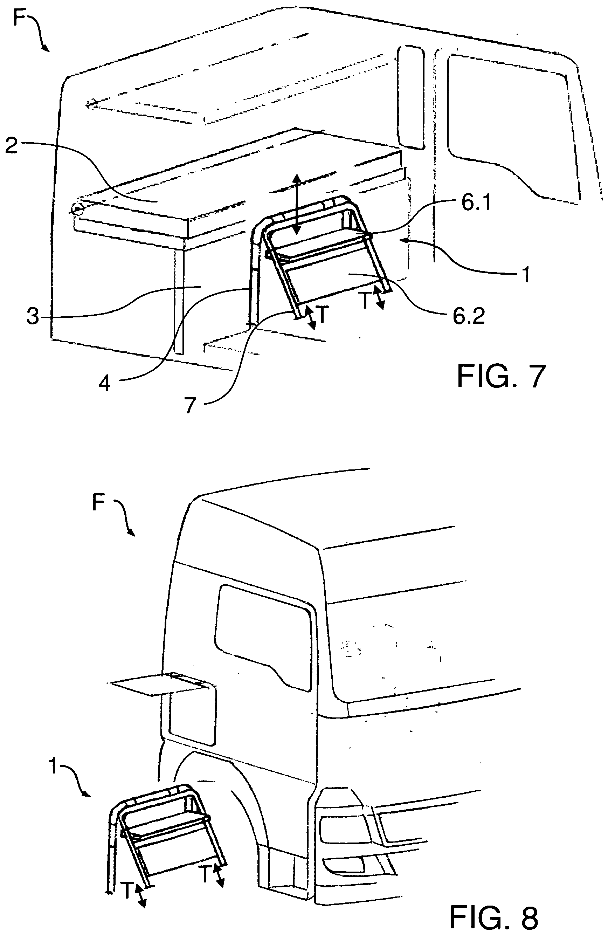

Figur 7 zeigt eine perspektivische Ansicht in ein Fahrerhaus F mit einer Rückhaltevorrichtung 1 für eine Fahrerhaus-Liege 2 gemäß einer Ausführungsform der Erfindung.
Die Rückhaltevorrichtung 1 umfasst zunächst ein wie zuvor beschriebenes, nach oben und unten verschiebbares Rückhalteelement 4.
Eine Besonderheit ist, dass das Rückhalteelement 4 eine relativ zu dem Rückhalteelement 4 verschwenkbare Schwenkkonstruktion 7, insbesondere einen Schwenkbügel 7 aufweist. An dem Schwenkbügel 7 ist eine plattenförmige Einrichtung 6.1 und eine optionale plattenförmige Ergänzungseinrichtung 6.2 montiert.

Der Schwenkbügel 7 umfasst zwei teleskopartig aus- und einfahrbare Stützelemente T, um sich im ausgeschwenkten Zustand der Schwenkkonstruktion 7 auf einer Stützfläche abstützen zu können.

Der Schwenkbügel 7 ist in einer senkrechten Ruhe-/Ausgangsposition, einer im Wesentlichen horizontalen Ausrichtung und einer schrägen Ausrichtung arretierbar.

Figur 7 zeigt den Schwenkbügel 7 in einer schrägen Ausrichtung und die plattenförmige Einrichtung 6.1 in einer horizontalen Ausrichtung.

In der in Figur 7 gezeigten Position/Stellung kann die plattenförmige Einrichtung 6.1 als Trittstufe zur Aufstiegshilfe zu der Fahrerhaus-Liege 2 genutzt werden.

Es ist möglich, dass die Schwenkkonstruktion 7, die plattenförmige Einrichtung 6.1 und die optionale plattenförmige Ergänzungseinrichtung 6.2 in eine horizontale Ausrichtung gebracht werden und zweckmäßig zumindest die Schwenkkonstruktion 7 und die plattenförmige Einrichtung 6.1 in der horizontalen Ausrichtung arretiert werden, so dass die plattenförmige Einrichtung 6.1 und die optionale plattenförmige Ergänzungseinrichtung 6.2 als Tisch dienen können.

Da die optionale plattenförmige Ergänzungseinrichtung 6.2 vorzugsweise fest und somit im Gegensatz zu der plattenförmigen Einrichtung 6.1 nicht drehbar an der Schwenkkonstruktion 7 montiert ist, ist eine separate Arretierung der optionalen plattenförmigen Ergänzungseinrichtung 6.2 unbedingt nicht erforderlich.

Figur 8 zeigt die Rückhaltevorrichtung 1 der Figur 7.

Figur 8 zeigt, dass die Rückhaltevorrichtung 1 aus dem Fahrerhaus F entnommen werden kann, um außerhalb des Fahrerhauses F z. B. als Sitz, Aufstiegshilfe und/oder Tisch zu dienen.

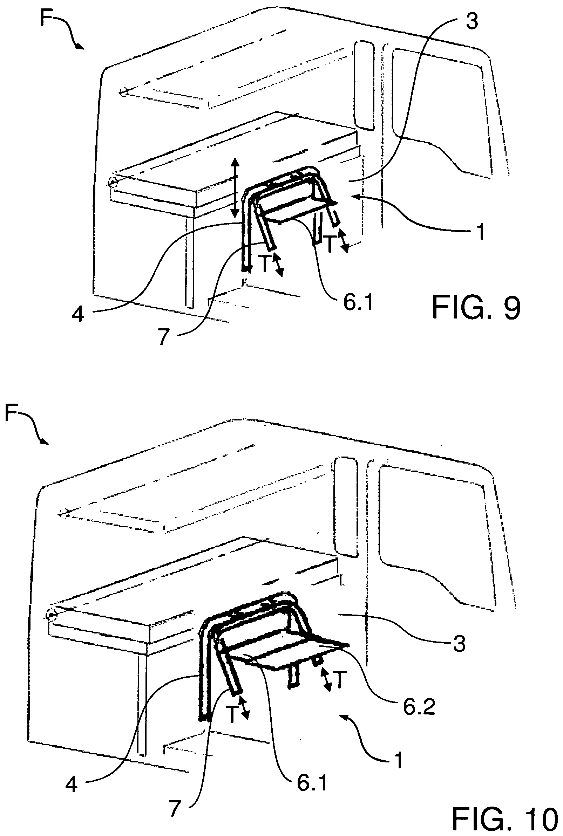

Figuren 9 und 10 zeigen eine perspektivische Ansicht einer Rückhaltevorrichtung 1 für eine Fahrerhaus-Liege 2 gemäß einer anderen Ausführungsform der Erfindung.

Die in den Figuren 9 und 10 gezeigte Rückhaltevorrichtung 1 ist ähnlich der Rückhaltevorrichtung 1 der Figuren 7 und 8. Eine Besonderheit ist allerdings, dass die plattenförmige Ergänzungseinrichtung 6.2 relativ zu der plattenförmige Einrichtung 6.1 ein- und ausfahrbar ist, so dass die plattenförmige Ergänzungseinrichtung 6.2 die plattenförmige Einrichtung 6.1 im ausgefahrenem Zustand ergänzen kann und im eingefahrenem Zustand überlappen kann. Alternativ zum Ein- und Ausfahren ist auch ein Ein- und Ausschwenken möglich.

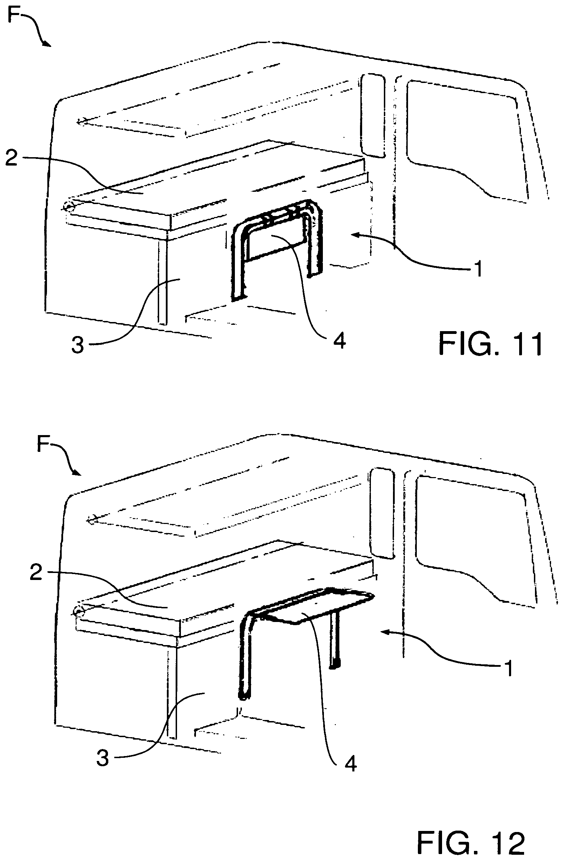

Figur 11 zeigt eine Ansicht in ein Fahrerhaus F mit einer Rückhaltevorrichtung 1 für eine Fahrerhaus-Liege 2 gemäß einer Ausführungsform der Erfindung.

Eine Besonderheit der in Figur 11 gezeigten Ausführungsform ist, dass das Rückhalteelement 4 als verschwenkbare plattenförmige Einrichtung ausgeführt ist.

Figur 11 zeigt das Rückhalteelement 4 in einer eingeschwenkten Ruhe-/Ausgangsposition (Stellung).

Figur 12 zeigt die Rückhaltevorrichtung 1 der Figur 10, allerdings mit dem Rückhalteelement 4 in horizontaler Ausrichtung arretiert, so dass es als Tisch genutzt werden kann.

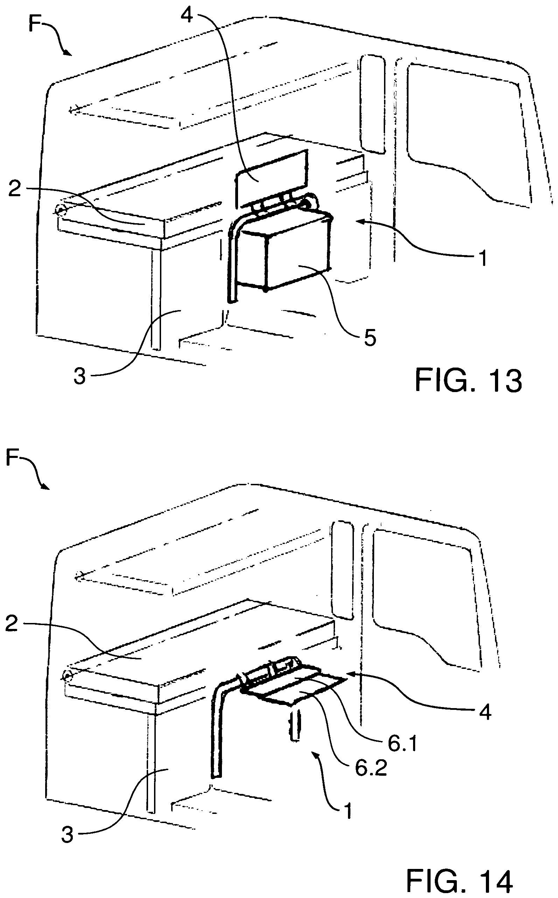

Figur 13 zeigt die Rückhaltevorrichtung 1 der Figuren 11 und 12, allerdings mit dem Rückhalteelement 4 in hochgeschwenkter Betriebsposition zur Sicherung einer Person gegen Herausfallen aus der Fahrerhaus-Liege 2.

Das Rückaltelement 4 ist folglich um im Wesentlichen 180° nach oben und unten schwenkbar, um von der Ausgangsposition in die Betriebsposition gebracht werden zu können.

Figur 13 zeigt außerdem, dass eine Kühl-/Staubox 5 unter dem Rückhalteelement 4 ein- und ausfahrbar ist.

Das Rückhalteelement 4 ist in den in den Figuren 11 bis 13 gezeigten Ausführungsformen an einem im Wesentlichen U-förmigen Montagebügel montiert, der optional im Wesentlich wie der zuvor beschriebene Sicherungsbügel 4 funktionieren und/oder ausgeführt sein kann.

Figur 14 zeigt eine perspektivische Ansicht in ein Fahrerhaus F mit einer Rückhaltevorrichtung 1 für eine Fahrerhaus-Liege 2 gemäß einer Ausführungsform der Erfindung.

Die Rückhaltevorrichtung 1 entspricht im Wesentlichen der in den Figuren 11 bis 13 gezeigten Rückhaltevorrichtung 1. Eine Besonderheit ist allerdings, dass das Rückhalteelement 4 eine plattenförmige Einrichtung 6.1 und eine plattenförmige Ergänzungseinrichtung 6.2 umfasst. Die plattenförmige Ergänzungseinrichtung 6.2 kann relativ zu der plattenförmigen Einrichtung 6.1 verschwenkbar sein oder relativ dazu ein- und ausfahrbar sein, um die plattenformige Einrichtung 6.1 zu vergrößern.
Zu erwähnen ist allgemein, dass das Rückhalteelement 4 mit einer nicht dargestellten Bewegungsdämpfung zur Dämpfung dessen Schwenk- und/oder Verschiebebewegung versehen sein kann, z. B. mit zumindest einer Feder (z. B. Torsionsfeder, Spiralfeder, etc.), zumindest einem elastischen Dämpfungselement und/oder einem Zahnrad- und/oder Zahnstangenmechanismus, etc. Sogar eine hydraulische Bewegungsdämpfung ist möglich.
Die Bewegungsdämpfung ermöglicht insbesondere, dass das Betätigen bzw. der Bewegungsablauf des Rückhalteelements 4 haptisch angenehmer erfolgen kann. Alternativ oder ergänzend kann vorzugsweise vor Erreichen der Ausgangsposition die Bewegung des Rückhaltelements 4 gedämpft werden, so dass z. B. ein abruptes, unkontrolliertes meist als unangenehm empfundenes Herunterfallen bzw. Herunterknallen des Rückhalteelements 4 vermieden werden kann.
In einer nicht gezeigten Ausführungsform kann das Rückhalteelement 4 und/oder die Schwenkkonstruktion 7 in Breitenrichtung B des Fahrzeugs längenvariabel ausgeführt sein und zu diesem Zweck zumindest einen beweglichen Teilabschnitt umfassen, der über einen Schiebe- oder Schwenkmechanismus ein- und ausgefahren oder ein- und ausgeschwenkt werden kann. So kann z. B. das Rückhaltelement 4 der Figur 1 in Breitenrichtung B ein- und ausfahrbar ausgeführt werden, so dass die U-Form verbreiterbar oder verschmälerbar ist. Das Rückhalteelement 4 der Figur 13 z. B. kann mit einer in Breitenrichtung B um im Wesentlichen 180° ein- und ausschwenkbaren Einrichtung ausgestattet werden, um das Rückhalteelement 4 in Breitenrichtung B zu verlängern. Möglich ist sogar eine quasi nach links und eine quasi nach rechts verschwenkbare bzw. verfahrbare Konstruktion zur Verbreiterung des Rückhalteelements 4.

Die Rückhaltevorrichtung 1 kann in einer einfachen Ausführungsform, die nicht zum Gegenstand der Erfindung gehört, ausschließlich als Herausfallsicherung dienen, allerdings in anderen Ausführungsformen multifunktional genutzt werden, insbesondere als Liegen-Herausfallsicherung und zusätzlich als Sitz, Aufstiegshilfe und/oder Tisch (Brotzeitzisch vom Fahrer-/Beifahrersitz aus und/oder Nachttisch von Liege aus).

### Bezugszeichenliste

- 1: Rückhaltevorrichtung
- 2: Fahrzeug-Liege
- 3: Fahrzeug-Wand, insbesondere Fahrzeug-Schottwand
- 4: Rückhalteelement
- 5: Kühl- und/oder Staubox
- 6.1: Plattenförmige Einrichtung
- 6.2: Plattenförmige Ergänzungseinrichtung
- 7: Schwenkkonstruktion, insbesondere Schwenkbügel
- H: Höhen-Nertikalrichtung des Fahrzeugs
- B: Breitenrichtung des Fahrzeugs
- F: Fahrerhaus / Fahrzeug

## Patentansprüche

1. Rückhaltevorrichtung (1) für eine Fahrzeug-Liege (2) und vorzugsweise zur Montage an eine Fahrzeug-Wand (3), wobei die Rückhaltevorrichtung (1) ein Rückhalteelement (4) zur Sicherung einer Person gegen Herausfallen aus der Fahrzeug-Liege (2) aufweist, wobei das Rückhalteelement (4) von einer Ausgangsposition in zumindest eine Betriebsposition zur Sicherung der Person gegen Herausfallen aus der Fahrzeug-Liege (2) verschwenkbar und/oder verschiebbar ist, **dadurch gekennzeichnet, dass** die Rückhaltevorrichtung (1) eine verschwenkbare, in einer horizontalen Ausrichtung arretierbare plattenförmige Einrichtung (6.1) aufweist, die in der horizontalen Ausrichtung als Aufstiegshilfe und/oder als Tischplatte dient.

2. Rückhaltevorrichtung (1) nach Anspruch 1, **dadurch gekennzeichnet, dass** das Rückhalteelement (4) in Höhenrichtung (H) des Fahrzeugs verschiebbar ausgeführt ist.

3. Rückhaltevorrichtung (1) nach Anspruch 1 oder 2, **dadurch gekennzeichnet, dass** das Rückhalteelement (4) als Sicherungsbügel ausgeführt ist.

4. Rückhaltevorrichtung (1) nach einem der vorhergehenden Ansprüche, **dadurch gekennzeichnet, dass** die Rückhaltevorrichtung (1) eine verschwenkbare, in einer horizontalen Ausrichtung arretierbare plattenförmige Ergänzungseinrichtung (6.2) aufweist, um die plattenförmige Einrichtung (6.1) zu ergänzen.

5. Rückhaltevorrichtung (1) nach einem der vorhergehenden Ansprüche, **dadurch gekennzeichnet, dass** die plattenförmige Einrichtung (6.1) und/oder die plattenförmige Ergänzungseinrichtung (6.2)
a) an dem Rückhalteelement (4) gehaltert ist, und
b) relativ zum Rückhaltelement (4) verschwenkbar ist; und/oder
c) zusammen mit dem Rückhalteelement (4) verschiebbar ist.

6. Rückhaltevorrichtung (1) nach Anspruch 4 oder 5, **dadurch gekennzeichnet, dass** die plattenförmige Ergänzungseinrichtung (6.2) relativ zu der plattenförmigen Einrichtung (6.1) ausziehbar ist oder an der plattenförmigen Einrichtung (6.1) schwenkbar montiert ist, um relativ zu der plattenförmigen Einrichtung (6.1) verschwenkbar zu sein.

7. Rückhaltevorrichtung (1) nach einem der vorhergehenden Ansprüche, **dadurch gekennzeichnet, dass** die Rückhaltevorrichtung (1) eine Schwenkkonstruktion (7), insbesondere einen Schwenkbügel (7), aufweist, an der die plattenförmige Einrichtung (6.1) und vorzugsweise die plattenförmige Ergänzungseinrichtung (6.2) gehaltert ist.

8. Rückhaltevorrichtung (1) nach Anspruch 7, **dadurch gekennzeichnet, dass** die Schwenkkonstruktion (7) teleskopartig aus- und einfahrbare Stützelemente (T) aufweist.

9. Rückhaltevorrichtung (1) nach Anspruch 7 oder 8, **dadurch gekennzeichnet, dass** die Schwenkkonstruktion (7) schwenkbar an dem Rückhalteelement (4), insbesondere dem Sicherungsbügel (4), gehaltert ist.

10. Rückhaltevorrichtung (1) nach einem der Ansprüche 7 bis 9, **dadurch gekennzeichnet, dass** die Schwenkkonstruktion (7) in einer senkrechten Ausrichtung, einer horizontalen Ausrichtung und/oder einer schrägen Ausrichtung arretierbar ist.

11. Rückhaltevorrichtung (1) nach einem der Ansprüche 7 bis 10, **dadurch gekennzeichnet, dass** eine plattenförmige Einrichtung (6.1) an der Schwenkkonstruktion (7) gehaltert ist, relativ zu der Schenkkonstruktion (7) drehbar ist und/oder zusammen mit der Schwenkkonstruktion (7) verschwenkbar ist, um zweckmäßig in der horizontalen Ausrichtung als Aufstiegshilfe und/oder als Tischplatte zu dienen.

12. Rückhaltevorrichtung (1) nach einem der Ansprüche 7 bis 11, **dadurch gekennzeichnet, dass** eine plattenförmige Ergänzungseinrichtung (6.2) an der Schwenkkonstruktion (7) gehaltert ist und/oder zusammen mit der Schwenkkonstruktion (7) verschwenkbar ist, um zweckmäßig die plattenförmige Einrichtung (6.1) zu ergänzen.

13. Rückhaltevorrichtung (1) nach Anspruch 1, **dadurch gekennzeichnet, dass** das Rückhalteelement (4) als verschwenkbare plattenförmige Einrichtung ausgeführt ist und vorzugsweise um 180° +/-25° nach oben und unten verschwenkbar ist, um von der Ausgangsposition zu der Betriebsposition oder umgekehrt zu gelangen.

14. Rückhaltevorrichtung (1) nach einem der vorhergehenden Ansprüche, **dadurch gekennzeichnet, dass** das Rückhalteelement (4) in der Ausgangsposition in einer senkrechten Ausrichtung, in der Betriebsposition in einer senkrechten Ausrichtung und/oder in einer horizontalen Ausrichtung arretierbar ist, um als Aufstiegshilfe und/oder als Tischplatte zu dienen.

15. Rückhaltevorrichtung (1) nach einem der vorhergehenden Ansprüche, **dadurch gekennzeichnet, dass** das Rückhalteelement (4) um 180° +/- 25° verschwenkbar ist, vorzugsweise in Höhenrichtung (H) und/oder Breitenrichtung (B) des Fahrzeugs.

16. Rückhaltevorrichtung (1) nach einem der vorhergehenden Ansprüche, **dadurch gekennzeichnet, dass** die Rückhaltevorrichtung (1) entnehmbar ausgeführt ist, um außerhalb des Fahrzeugs als Sitz, Aufstiegshilfe und/oder Tisch zu dienen.

17. Rückhaltevorrichtung (1) nach einem der vorhergehenden Ansprüche, **dadurch gekennzeichnet, dass** das Rückhalteelement (4) und/oder die Schwenkkonstruktion (7) in Breitenrichtung (B) des Fahrzeugs längenvariabel ist, insbesondere ein- und ausschiebbar oder ein- und ausschwenkbar ausgeführt ist.

18. Rückhaltevorrichtung (1) nach einem der vorhergehenden Ansprüche, **dadurch gekennzeichnet, dass** das Rückhalteelement (4) und/oder die Schwenkkonstruktion (7) U-förmig ausgebildet ist und/oder aus zumindest einem Stabelement ausgebildet ist.

19. Rückhaltevorrichtung (1) nach einem der vorhergehenden Ansprüche, **dadurch gekennzeichnet, dass** eine Kühl- und/oder Staubox (5) vorgesehen ist und die Kühl-und/oder Staubox (5) und das Rückhalteelement (4) so ausgeführt und anordbar sind, dass die Kühl- und/oder Staubox (5) unter und/oder zwischen dem Rückhalteelement (4) ein- und ausfahrbar ist.

20. Rückhaltevorrichtung (1) nach einem der vorhergehenden Ansprüche, **dadurch gekennzeichnet, dass** das Rückhalteelement (4) mit einer Bewegungsdämpfung versehen ist.

21. Rückhaltevorrichtung (1) nach einem der vorhergehenden Ansprüche, **dadurch gekennzeichnet, dass** das Rückhalteelement (4) in einer Aufnahmekonstruktion in Höhenrichtung (H) des Fahrzeugs geführt gelagert ist.

22. Rückhaltevorrichtung (1) nach einem der vorhergehenden Ansprüche, **dadurch gekennzeichnet, dass** das Rückhalteelement (4) von einer unteren Ausgangsposition nach oben in zumindest eine obere Betriebsposition zur Sicherung der Person gegen Herausfallen aus der Fahrzeug-Liege (2) verschwenkbar und/oder verschiebbar ist.

23. Fahrzeug oder Fahrerhaus (F) für einen Lastkraftwagen mit einer Rückhaltevorrichtung (1) nach einem der vorhergehenden Ansprüche.

## Claims

1. Retaining device (1) for a vehicle bed (2) and preferably for assembly to a vehicle wall (3), wherein the retaining device (1) has a retaining member (4) for securing an individual to prevent them from falling out of the vehicle bed (2), wherein the retaining member (4) is pivotable and/or displaceable from an initial position into at least one operating position to secure the individual to prevent them from falling out of the vehicle bed (2), **characterized in that** die retaining device (1) has a pivotable, plate-shaped mechanism (6.1) that can be locked in a horizontal orientation, which mechanism is used in the horizontal orientation as a climbing aid and/or as a table top.

2. Retaining device (1) according to Claim 1, **characterized in that** the retaining member (4) is displaceably configured in the height direction (H) of the vehicle.

3. Retaining device (1) according to Claim 1 or 2, **characterized in that** the retaining member (4) is configured as a securing bracket.

4. Retaining device (1) according to one of the preceding claims, **characterized in that** the retaining device (1) has a pivotable, plate-shaped supplementary mechanism (6.2) that can be locked in a horizontal orientation, in order to supplement the plate-shaped mechanism (6.1).

5. Retaining device (1) according to one of the preceding claims, **characterized in that** the plate-shaped mechanism (6.1) and/or the plate-shaped supplementary mechanism (6.2)
a) is held on the retaining member (4) and
b) is pivotable relative to the retaining member (4) and/or
c) is displaceable along with the retaining member (4).

6. Retaining device (1) according to Claim 4 or 5, **characterized in that** the plate-shaped supplementary mechanism (6.2) is extendable relative to the plate-shaped mechanism (6.1) or is pivotably mounted on the plate-shaped mechanism (6.1), in order to be pivotable relative to the plate-shaped mechanism (6.1).

7. Retaining device (1) according to one of the preceding claims, **characterized in that** die retaining device (1) has a pivoting construction (7), in particular a pivoting bracket (7), on which the plate-shaped mechanism (6.1) and preferably the plate-shaped supplementary mechanism (6.2) is held.

8. Retaining device (1) according to Claim 7, **characterized in that** the pivoting construction (7) has telescopically extendable and retractable supporting members (T).

9. Retaining device (1) according to Claim 7 or 8, **characterized in that** the pivoting construction (7) is held pivotably on the retaining member (4), particularly on the securing bracket (4).

10. Retaining device (1) according to one of Claims 7 to 9, **characterized in that** the pivoting construction (7) can be locked in a perpendicular orientation, a horizontal orientation and/or an oblique orientation.

11. Retaining device (1) according to one of Claims 7 to 10, **characterized in that** a plate-shaped mechanism (6.1) is held on the pivoting construction (7), is rotatable relative to the pivoting construction (7) and/or is pivotable along with the pivoting construction (7), in order to be advantageously used in the horizontal orientation as a climbing aid and/or as a table top.

12. Retaining device (1) according to one of Claims 7 to 11, **characterized in that** a plate-shaped supplementary mechanism (6.2) is held on the pivoting construction (7) and/or is pivotable along with the pivoting construction (7), in order advantageously to supplement the plate-shaped mechanism (6.1).

13. Retaining device (1) according to Claim 1, **characterized in that** the retaining member (4) is configured as a pivotable, plate-shaped mechanism and is preferably pivotable about 180° +/-25° upwards and downwards, in order to reach the operating position from the initial position or vice versa.

14. Retaining device (1) according to one of the preceding claims, **characterized in that** the retaining member (4) is lockable in the initial position in a perpendicular orientation, in the operating position in a perpendicular orientation and/or in a horizontal orientation, in order to be used as a climbing aid and/or as a table top.

15. Retaining device (1) according to one of the preceding claims, **characterized in that** the retaining member (4) is pivotable about 180° +/- 25°, preferably in a height direction (H) and/or width direction (B) of the vehicle.

16. Retaining device (1) according to one of the preceding claims, **characterized in that** the retaining device (1) is configured such as to be removable, so that it can be used outside the vehicle as a seat, climbing aid and/or table.

17. Retaining device (1) according to one of the preceding claims, **characterized in that** the retaining member (4) and/or the pivoting construction (7) is configured in a length-variable manner in the width direction (B) of the vehicle, in particular in a slide-in and slide-out manner or a pivot-in and pivot-out manner.

18. Retaining device (1) according to one of the preceding claims, **characterized in that** the retaining member (4) and/or the pivoting construction (7) is U-shaped in configuration and/or is made up of at least one rod element.

19. Retaining device (1) according to one of the preceding claims, **characterized in that** a cool and/or storage box (5) is provided and the cool and/or storage box (5) and the retaining member (4) are configured and arranged in such a manner that the cool and/or storage box (5) can be retracted and extended beneath and/or between the retaining member (4).

20. Retaining device (1) according to one of the preceding claims, **characterized in that** the retaining member (4) is provided with movement damping.

21. Retaining device (1) according to one of the preceding claims, **characterized in that** the retaining member (4) is mounted in a guided manner in a receiving construction in the height direction (H) of the vehicle.

22. Retaining device (1) according to one of the preceding claims, **characterized in that** the retaining member (4) is pivotable and/or displaceable from a lower initial position upwards into at least one upper operating position for securing the individual to prevent them from falling out of the vehicle bed (2).

23. Vehicle or vehicle cab (F) for a heavy goods vehicle with a retaining device (1) according to one of the preceding claims.

## Revendications

1. Dispositif de retenue (1) pour une couchette de véhicule (2) et de préférence pour le montage sur un panneau de véhicule (3), le dispositif de retenue (1) présentant un élément de retenue (4) pour maintenir une personne pour l'empêcher de tomber de la couchette de véhicule (2), l'élément de retenue (4) pouvant pivoter et/ou coulisser d'une position de départ dans au moins une position de fonctionnement pour maintenir la personne pour l'empêcher de tomber de la couchette de véhicule (2), **caractérisé en ce que** le dispositif de retenue (1) présente un dispositif en forme de plaque (6.1) pivotant, pouvant être bloqué dans une orientation horizontale, qui, dans l'orientation horizontale, sert d'aide à la montée et/ou de plateau de table.

2. Dispositif de retenue (1) selon la revendication 1, **caractérisé en ce que** l'élément de retenue (4) est réalisé de manière à pouvoir coulisser dans le sens de la hauteur (H) du véhicule.

3. Dispositif de retenue (1) selon la revendication 1 ou 2, **caractérisé en ce que** l'élément de retenue (4) est réalisé sous forme d'arceau de maintien.

4. Dispositif de retenue (1) selon l'une quelconque des revendications précédentes, **caractérisé en ce que** le dispositif de retenue (1) présente un dispositif complémentaire pivotant (6.2) en forme de plaque, pouvant être bloqué dans une orientation horizontale, pour compléter le dispositif en forme de plaque (6.1).

5. Dispositif de retenue (1) selon l'une quelconque des revendications précédentes, **caractérisé en ce que** le dispositif en forme de plaque (6.1) et/ou le dispositif complémentaire (6.2)
a) sont attachés sur l'élément de retenue (4), et
b) peuvent pivoter par rapport à l'élément de retenue (4) ; et/ou
c) peuvent coulisser conjointement avec l'élément de retenue (4).

6. Dispositif de retenue (1) selon la revendication 4 ou 5, **caractérisé en ce que** le dispositif complémentaire (6.2) en forme de plaque peut être sorti par rapport au dispositif en forme de plaque (6.1) ou est monté de manière à pouvoir pivoter sur le dispositif en forme de plaque (6.1) afin de pouvoir être pivoté par rapport au dispositif en forme de plaque (6.1).

7. Dispositif de retenue (1) selon l'une quelconque des revendications précédentes, **caractérisé en ce que** le dispositif de retenue (1) présente une construction pivotante (7), en particulier un arceau pivotant (7) auquel est attaché le dispositif en forme de plaque (6.1) et de préférence le dispositif complémentaire en forme de plaque (6.2).

8. Dispositif de retenue (1) selon la revendication 7, **caractérisé en ce que** la construction pivotante (7) présente des éléments de support (T) pouvant être sortis et rentrés de manière télescopique.

9. Dispositif de retenue (1) selon la revendication 7 ou 8, **caractérisé en ce que** la construction pivotante (7) est attachée de manière pivotante à l'élément de retenue (4), en particulier à l'arceau de maintien (4).

10. Dispositif de retenue (1) selon l'une quelconque des revendications 7 à 9, **caractérisé en ce que** la construction pivotante (7) peut être bloquée dans une orientation verticale, une orientation horizontale et/ou une orientation oblique.

11. Dispositif de retenue (1) selon l'une quelconque des revendications 7 à 10, **caractérisé en ce qu'**un dispositif en forme de plaque (6.1) est attaché à la construction pivotante (7), peut tourner par rapport à la construction pivotante (7) et/ou peut pivoter conjointement avec la construction pivotante (7), afin de servir de manière judicieuse d'aide à la montée et/ou de plateau de table dans l'orientation horizontale.

12. Dispositif de retenue (1) selon l'une quelconque des revendications 7 à 11, **caractérisé en ce qu'**un dispositif complémentaire en forme de plaque (6.2) est attaché à la construction pivotante (7) et/ou peut pivoter conjointement avec la construction pivotante (7) afin de compléter de manière judicieuse le dispositif en forme de plaque (6.1).

13. Dispositif de retenue (1) selon la revendication 1, **caractérisé en ce que** l'élément de retenue (4) est réalisé sous forme de dispositif en forme de plaque pivotante et peut pivoter de préférence de 180° +/- 25° vers le haut et vers le bas, afin de parvenir de la position de départ dans la position de fonctionnement ou inversement.

14. Dispositif de retenue (1) selon l'une quelconque des revendications précédentes, **caractérisé en ce que** l'élément de retenue (4) peut être bloqué dans la position de départ dans une orientation verticale, dans la position de fonctionnement dans une orientation verticale et/ou dans une orientation horizontale, afin de servir d'aide à la montée et/ou de plateau de table.

15. Dispositif de retenue (1) selon l'une quelconque des revendications précédentes, **caractérisé en ce que** l'élément de retenue (4) peut pivoter de 180° +/- 25°, de préférence dans le sens de la hauteur (H) et/ou dans le sens de la largeur (B) du véhicule.

16. Dispositif de retenue (1) selon l'une quelconque des revendications précédentes, **caractérisé en ce que** le dispositif de retenue (1) est réalisé de manière amovible afin de servir de siège, d'aide à la montée et/ou de table à l'extérieur du véhicule.

17. Dispositif de retenue (1) selon l'une quelconque des revendications précédentes, **caractérisé en ce que** l'élément de retenue (4) et/ou la construction pivotante (7) présente une longueur variable dans le sens de la largeur (B) du véhicule, en particulier est réalisé(e) de manière à pouvoir être rentré(e) et sorti(e) ou à pouvoir rentrer et sortir par pivotement.

18. Dispositif de retenue (1) selon l'une quelconque des revendications précédentes, **caractérisé en ce que** l'élément de retenue (4) et/ou la construction pivotante (7) est réalisé (e) en forme de U et/ou est réalisé(e) à partir d'au moins un élément en forme de barre.

19. Dispositif de retenue (1) selon l'une quelconque des revendications précédentes, **caractérisé en ce qu'**une boîte de refroidissement et/ou une boîte de rangement (5) est prévue et la boîte de refroidissement et/ou la boîte de rangement (5) et l'élément de retenue (4) sont réalisés et peuvent être disposés de telle sorte que la boîte de refroidissement et/ou la boîte de rangement (5) puissent être rentrées et sorties sous et/ou entre l'élément de retenue (4).

20. Dispositif de retenue (1) selon l'une quelconque des revendications précédentes, **caractérisé en ce que** l'élément de retenue (4) est pourvu d'un amortissement de mouvement.

21. Dispositif de retenue (1) selon l'une quelconque des revendications précédentes, **caractérisé en ce que** l'élément de retenue (4) est supporté de manière à être guidé dans une construction de réception dans le sens de la hauteur (H) du véhicule.

22. Dispositif de retenue (1) selon l'une quelconque des revendications précédentes, **caractérisé en ce que** l'élément de retenue (4) peut pivoter et/ou peut coulisser d'une position de départ inférieure vers le haut dans au moins une position de fonctionnement supérieure pour maintenir la personne de manière à l'empêcher de tomber de la couchette de véhicule (2).

23. Véhicule ou cabine de conducteur (F) pour un véhicule poids-lourd comprenant un dispositif de retenue (1) selon l'une quelconque des revendications précédentes.
